# EUROPEAN PATENT APPLICATION

(11) **EP 4 169 819 A1**
(43) Date of publication of application: **26.04.2023**
(21) Application number: 22201586.9
(22) Date of filing: 14.10.2022
(51) Int. Cl.: B62H 3/06, B62H 3/04

(54) **BICYCLE STAND**

(30) Priority: 22.10.2021 JP 2021173085
(71) Applicant: Unico Corporation, Sakai-shi, Osaka 590-0072 (JP)
(72) Inventor: TATEBE, Hiroyuki, Osaka, 590-0072 (JP)
(74) Representative: Kindermann, Peter

(57) **Abstract**

The present invention provides a portable bicycle stand capable of stably supporting a bicycle by restricting left-right swing of a tire of a wheel by a constitution of lower cost than the conventional one. The bicycle stand 1 comprises a pair of left and right frames 2 that support a wheel from left and right, and a pair of forward and backward connecters 3 for connecting the lower ends of the frames 2. The connecter 3 comprises a left member 31 to which the left frame 2 is connected, a right member 32 to which the right frame 2 is connected, and a hinge 33 for rotatably connecting the left member 31 and the right member 32, wherein the left and right members 31, 32 each comprise a wheel mounting portion 34 on which a tire of a wheel is mounted. The hinge 33 is configured to be lowered by a load from a wheel mounted on the wheel mounting portions 34, and the frames 2 and the wheel mounting portions 34, respectively, are configured to work so as to sandwich and support the wheel and the tire from left and right.

## Description

### TECHNICAL FIELD

The present invention relates to a bicycle stand that is portable and allows a bicycle having no stand to be parked independently.

### BACKGROUND ART

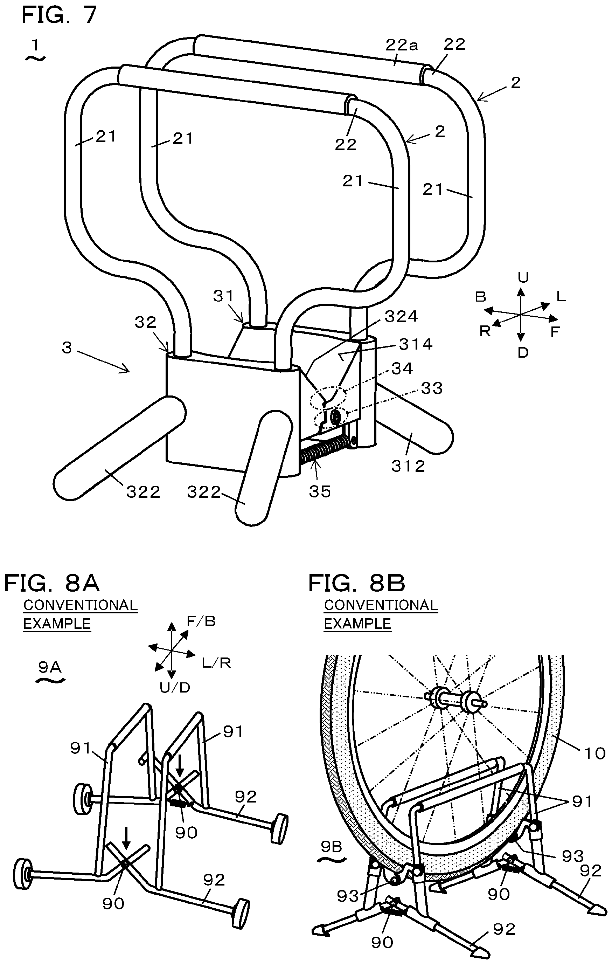

Conventionally, a bicycle stand 9A shown in FIG. 8A is known as a portable stand. The bicycle stand 9A comprises a pair of left and right (L/R) gantry members 91, and a pair of forward and backward (F/B) leg members 92 welded to the lower ends of the two gantry members 91. Each of the leg members 92 is assembled by rotatably connecting left and right rod members by a rotating shaft 90. When a wheel is placed on portions above the rotating shafts 90 of the bicycle stand 9A, the portions around the rotating shafts 90 lower, and the upper portions of the left and right gantry members 91 approach each other to support the wheel so as to sandwich the wheel from both the left and right of it.

In this bicycle stand 9A, there is an instability that the tire of the wheel swings left and right on the portions above the rotating shaft 90, in which the upper portions contact and support the tire. In order to cope with this instability, a bicycle stand 9B shown in FIG. 8B has been proposed (see, for example, Patent Document 1). The bicycle stand 9B is provided with, additionally above the the rotating shafts 90, wheel-mounting parts 93 that open and close for sandwiching and supporting the tire of the wheel 10. When the wheel 10 is mounted, each of the wheel-mounting parts 93 closes by receiving the load from the wheel and deforms so as to sandwich the tire to regulate the left and right swings of the tire.

### PRIOR ART DOCUMENTS

### PATENT DOCUMENTS

Patent Document 1: Japanese Publication of Patent Application No. JP2019-107952A

### DISCLOSURE OF THE INVENTION

However, in the bicycle stand 9B shown in Patent Document 1 described above, it is difficult to reduce the manufacturing cost due to the addition of the wheel-mounting parts 93 and additional structure for assembling such parts.

An object of the present invention is to solve the above-mentioned problems, and to provide a bicycle stand being portable and capable of stably supporting a bicycle by regulating left and right swings of wheel tire by a configuration of lower cost than the conventional one.

In order to achieve the above problems, the bicycle stand of the present invention is a bicycle stand portable for supporting a wheel of a bicycle, comprising:
a pair of left and right frames that support the wheel from left and right; and
a connecter for connecting lower ends of the frames to each other, wherein
the connecter comprises:
   a left member to which the left frame is connected;
   a right member to which the right frame is connected; and
   a hinge for rotatably connecting the left member and the right member, wherein
each of the left and right members comprises:
   a wheel mounting portion, integrally formed with each of the left and right members, on which a tire of the wheel is mounted; and
   a leg portion, integrally formed with each of the left and right members, for securing a space in which the hinge can move downward, wherein
   the hinge is configured by butting and combining a part of the left member and a part of the right member and integrally formed with each of the left and right members, and
   when the wheel is mounted on the wheel mounting portions, the hinge is lowered by a load from the wheel, and the frames and the wheel mounting portions, respectively, work so as to sandwich and support the wheel and the tire from left and right.

In this bicycle stand, each of the left member and the right member may be made of a resin molded product, and each of the frames may be made of a metal pipe bended.

In this bicycle stand, each of the left member and the right member may have an inclined portion for guiding the wheel toward the wheel mounting portion.

In this bicycle stand,
the connecter may comprise an urging member for urging the left member and the right member to rotate around the hinge in respective directions in which upper ends of the left and right frames are opened when the stand is not used, and
the wheel mounting portions may have a large-diameter arc shape viewed from a forward-backward direction when the bicycle stand is not used, and
the wheel mounting portions may have a small-diameter arc shape, of a radius of curvature smaller than that of the large-diameter arc shape, viewed from the same direction when the bicycle stand is used while the wheel is mounted and the left and right members are rotated against an urging force from the urging member.

According to the bicycle stand of the present invention, when a wheel is mounted on the wheel mounting portions, the hinge is lowered by the load from the wheel, and the frames and the wheel mounting portions, respectively, work so as to sandwich the wheel and the tire from left and right, and therefore, it is possible to suppress the left-right swings of the tire and stably support the bicycle. Further, since the tire is sandwiched by the wheel mounting portions provided on the connecter without additionally providing the wheel-mounting parts for sandwiching the tire in the conventional example, a cost bicycle stand of low cost can be realized.

### BRIEF DESCRIPTION OF THE DRAWINGS

FIG.1A is a perspective view of a bicycle stand according to an embodiment of the present invention, showing a working state in which a bicycle wheel is placed on.
FIG. 1B is a perspective view of the bicycle stand in a state supporting the bicycle wheel placed on the bicycle stand.
FIG. 2 is a perspective view of the bicycle stand in a non-working state.
FIG. 3 is an exploded perspective view of a connecter of the bicycle stand.
FIG. 4 is an exploded perspective view showing a modified example of a hinge of the connecter.
FIG. 5A is a front view of the bicycle stand before working.
FIG. 5B is a front view of the bicycle stand in the working state supporting the wheel of the bicycle.
FIG. 6 is a exploded perspective view of the bicycle stand.
FIG. 7 is a perspective view showing a modified example of the bicycle stand.
FIG. 8A is a perspective view of a conventional bicycle stand.
FIG. 8B is a perspective view of another conventional bicycle stand on which a bicycle wheel is mounted on.

### MODE FOR CARRYING OUT THE INVENTION

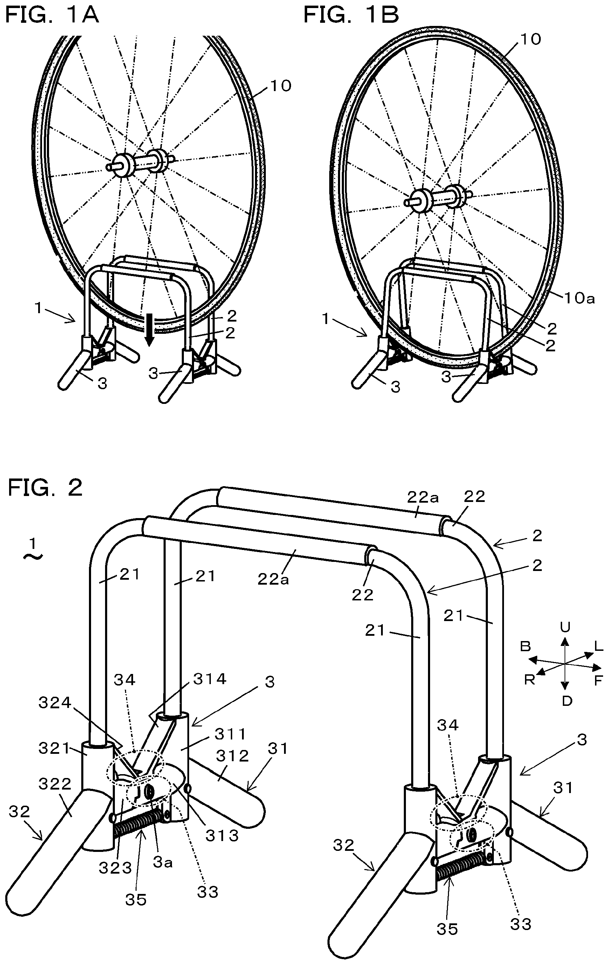

Hereinafter, the bicycle stand according to the embodiment of the present invention is described with reference to the drawings. As shown in FIGS. 1 to 3, the bicycle stand 1 is a portable bicycle stand that supports a bicycle when a wheel 10 of the bicycle is mounted on it, and it comprises a pair of left (L) and right (R) frames 2, 2 for supporting the wheel 10 from left and right, and a pair of forward (F) and backward (B) connecters 3, 3 for connecting lower ends of the frames 2 to each other. The details of each part are described below.

The frame 2 has two vertical portions 21 arranged on the forward side and the backward side of the wheel 10 and a girder portion 22 connecting between the upper ends of the vertical portions 21, and the entire frame 2 has a portal bridge shape or a gantry shape. The frame 2 is manufactured as an integral part having each of the vertical portions 21 and the girder portion 22, for example, by bending a rod-shaped material, particularly a metal pipe. The girder portion 22 may be provided, on its surface, with a cushioning or buffering material 22a made of resin or wood, or others. The frame 2 may be formed by using a material, that is, coated with a resin such as vinyl chloride. Further, the frame 2 may be manufactured as a plastic molded product by resin molding without bending the rod-shaped material, or may be made of wood.

The connecter 3 comprises a left member 31 to which the left frame 2 is connected, a right member 32 to which the right frame 2 is connected, and a hinge 33 which rotatably connects the left member 31 and the right member 32. The hinge 33 is configured by butting and combining a part of the left member 31 and a part of the right member 32 and integrally formed with each of the left member 31 and the right member 32. The left member 31 and the right member 32 each have a wheel mounting portion 34, integrally formed with those left and right members 31, 32, respectively, on which a tire 10a of the wheel 10 is mounted. Further, the connecter 3 comprises an urging member 35 which urges the left member 31 and the right member 32 to rotate around the hinge 33 in a direction in which the upper ends of the left and right frames 2, 2, namely, the girder portions 22 are opened when the bicycle stand 1 is not used.

In the present embodiment, each of the left member 31 and the right member 32 constituting the connecter 3 is made of a resin molded product. The resin-molded products to be the left member 31 and the right member 32 are, for example, parts having the same configuration which are resin-molded using the same mold or using a mold having the same shape. Further, the pair of the forward and backward connecters 3 are two connecters 3 having the same configuration. Therefore, the bicycle stand 1 of the present embodiment is configured by using four resin-molded products having the same configuration. In the following, the left member 31 will be mainly described on behalf of the left member 31 and the right member 32, and the right member 32 will be appropriately described. The description of the left member 31 is similarly applied to the right member 32 except for the difference in the attached numeral and the rotation direction of the corresponding portion.

The left member 31 is configured to have a pillar portion 311 extending in a vertical direction, a leg portion 312 extending from a lateral surface of the pillar portion 311 diagonally outward and downward, an arm portion 313 extending from a lateral surface of the pillar portion 311 toward the left (L)-right (R) center of the connecter 3, and an inclined portion 314 extending from an upper lateral surface of the pillar portion 311 toward an end portion of the arm portion 313 diagonally, in which those of the arrangement postures are described for the bicycle stand 1 in its use. Each of those portions is integrally molded with the left member 31. The right member 32 is also configured in the same manner as the left member 31.

The pillar portion 311 has an insertion hole 311a into which the lower end portion of the vertical portion 21 of the frame 2 is inserted, and a fixing hole 311b for inserting and fixing a pin or screw for fixing the vertical portion 21 inserted into the insertion hole 311a to prevent rotation or vertical movement thereof. The insertion hole 311a may be a bottomed or stepped semi-bottomed through hole, or a straight or tapered through hole. When the insertion hole 311a is bottomed or semi-bottomed, it may be filled with an arbitrary height filling to adjust the height position of the frame 2.

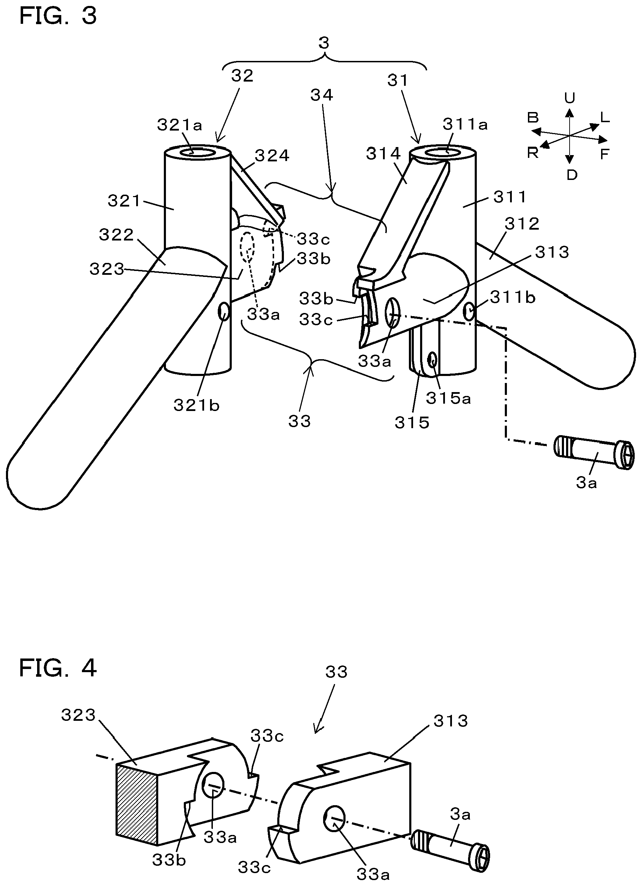

On the lower side surface of the pillar portion 311, a rib 315 of plate-shape is provided and protruding inward the connecter 3 in the left-right direction (See FIG. 3). The rib 315 has a locking hole 315a for fixing one end of the urging member 35. The urging member 35 urges the left and right leg portions 312, 322 of the connecter 3 to come close to each other, and the upper portions of the connecter 3, more accurately, the portions located above the rotation axis of the hinge 33 to go apart from each other. The urging member 35 is, for example, an elastic part such as a coil spring.

The lower end of the leg portion 312 touches the ground, and the bicycle stand 1 is supported from below so that the portion other than the leg portion 312 does not touch the ground, both when the bicycle stand 1 is used or not used. The left and right leg portions 312, 322 move to make open-motion or close-motion while sliding on the ground plane at the start or end of use of the bicycle stand 1. The leg portions 312, 322 form a space below the left-right center of the connecter 3, so that the hinge 33 can move downward in the space.

The arm portion 313 is a structure for forming the hinge 33 and a part of the wheel mounting portion 34. The arm portion 313 is provided with a shaft hole 33a, near the end portion of the arm portion 313, into which a hinge shaft 3a is inserted. The center axis position of the shaft hole 33a is at the left-right center position of the connecter 3, wherein the connecter 3 is formed by connecting the two resin molded products of the left member 31 and the right member 32 with the hinge shaft 3a. The arm portions 313, 323 are exemplified as a structure of a hollow circular pipe, but the outer shape may not be circular or may not be a pipe, for example, it may be a solid rectangular column as shown in FIG. 4.

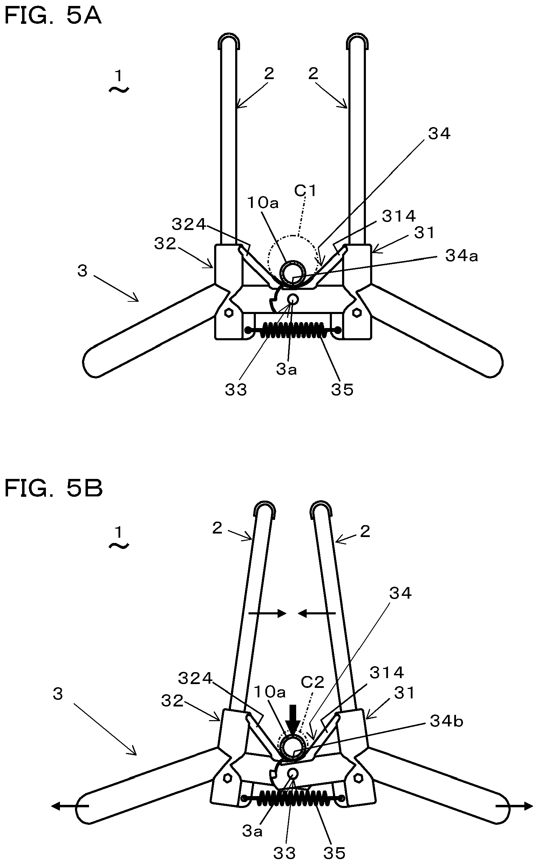

A plurality of notches or cut-outs are formed around the shaft hole 33a of the arm portion 313. These notches are formed so that the left member 31 and the right member 32 connected by the hinge shaft 3a can rotate around the hinge shaft 3a without interfering with each other (See FIG. 5B). Each of the notches has, for example, a cross-sectional outer shape comprising arcs, the center of each circle corresponding to each of the arcs is on the center axis of the shaft hole 33a, and there are two types notches having: a convex surface and a concave surface. In the state of the connecter 3 assembled and formed, the convex surfaces (or the concave surfaces) of the notches of the left member 31 faces the concave surfaces (or the convex surfaces) of the notches of the right member 32.

The arm portion 313 has an upward step portion 33c in the middle of the convex surface and a downward step portion 33b in the middle of the concave surface, as a structure in the notch around the shaft hole 33a. These structure together form a stopper structure. When the connecter 3 is assembled and formed, the upward step portion 33c of the left member 31 comes into contact with the downward step portion 33b of the right member 32, so that further rotation with respect to each other is stopped. The bicycle stand 1 is maintained in a standby state before use by the stopper structure and the urging member 35.

The connecter 3 is formed by butting and combining the left member 31 and the right member 32 by using the notched structures of the respective arm portions 313 and 323 and the hinge shaft 3a, and by this, the hinge 33 is formed which enables the approaching and separating movements of the left and right upper portions of the connecter 3. The distance between the left and right frames 2 connected to the connecter 3 is determined by the position of the hinge 33 with respect to the pillar portion 311. Further, since the hinge 33 is formed on the arm portion 313 extending in the direction perpendicular to the pillar portion 311, it is easy to change the design so that the position of the hinge 33 is moved closer to or further from the pillar portion 311. That is, it is easy to change the design of the distance between the left and right frames 2 of the bicycle stand 1, and it is easy to change the design according to the vehicle type, for example, to support a bicycle with wide tires (fat bike, etc.).

The inclined portion 314 is a structure for forming a part of the wheel mounting portion 34 and a guide mechanism for guiding the wheel 10 to the wheel mounting portion 34. The upper surface of the inclined portion 314 is lowered toward the wheel mounting portion 34. Due to this inclined structure, the inclined portion 314 acts as a guide mechanism for guiding the wheel 10 toward the center of the wheel mounting portion 34 when the wheel 10 is mounted on the wheel mounting portion 34. The center of the wheel mounting portion 34 is the center of the connecter 3 and the center of the hinge 33, when the connecter 3 is viewed in the vertical direction. The wheel 10 are preferably inserted between the left and right frames 2 in an upright state from directly above the center of the left and right frames 2 in the bicycle stand 1, that is, from directly above each center of the wheel mounting portions 34, however, even if the tire 10a is tilted to the left or right or is inserted off the center, the tire 10a is guided by contacting the tilted portion 314 or 324 or both, so that the tire 10a can be easily and appropriately mounted on each wheel mounting portion 34. The inclined portion 314 may also have the role of the arm portion 313, and for example, the hinge 33 may be provided at the lower end of the inclined portion 314.

Next, the wheel mounting portion 34 in the connecter 3 is described. As shown in FIGS. 5A and 5B, the wheel mounting portions 34 are distributed and formed on the upper surfaces of the left member 31 and the right member 32, more specifically, on the upper surfaces of the hinges 33 and the inclined portions 314 and 324. The shape of the wheel mounting portion 34 changes by itself according to the working state of the bicycle stand 1. The tire 10a of the wheel is schematically shown by a circular cross section.

FIG. 5A shows a non-working state of the stand, being not used, in which the load from the wheel is not applied to the wheel mounting portion 34 through the tire 10a, and the distance between the upper ends of the left and right frames 2 is in the widest state under the rotation restriction due to the stopper structure of the hinge 33 and the urging force due to the urging member 35. In this non-operating state, the central portion of the wheel mounting portion 34 forms a large-diameter recess 34a of a large-diameter arc shape viewed in the forward-backward direction. A virtual circle C1 shown in the figure is a circle along the shape of the large-diameter recess 34a, and the radius of the virtual circle C1 corresponds to a global or average radius of curvature of the large-diameter recess 34a.

The diameter of the virtual circle C1 corresponding to the large-diameter recess 34a is assumed to be, for example, 50 mm, and the width of the tire 10a is assumed to be, for example, 25 mm. This is because the average road racer type bicycle without a bicycle stand has tires with a tire width of 25 mm.

FIG. 5B shows a state of the bicycle stand being used in which the wheel is mounted on the wheel mounting portion 34, and the load from the wheel is applied to the wheel mounting portion 34 through the tire 10a, and this state is made by the rotating operation of the left member 31 and the right member 32 against the urging force due to the urging member 35 and by the opening operation of lower parts of the connecter 3, so that the upper ends of the left and right frames 2 became a closed operation state after approaching each other. In this closed operation state, the central portion of the wheel mounting portion 34 forms a small-diameter recess 34b of a small-diameter arc shape having a radius of curvature smaller than that of the large-diameter recess 34a viewed in the forward-backward direction. A virtual circle C2 shown in the figure is a circle along the shape of the small-diameter recess 34b, and the radius of the virtual circle C2 corresponds to the global or average radius of curvature of the small-diameter recess 34b.

The diameter of the virtual circle C2 corresponding to the small-diameter recess 34b is, for example, 30 mm. The small-diameter recess 34b can sufficiently regulate the left and right swings for the tire 10a having a width of 25 mm, and can effectively function as a swing-regulating recess.

The bicycle stand 1, having the wheel mounting portion 34 capable of forming the swing-regulating recess composed of the small-diameter recess 34b, is suitably used for an average road racer type bicycle. Further, the small-diameter recess 34b, by being formed in the wheel mounting portion 34, has a radius corresponding to a circle having a diameter of 30 mm according to the thickness of an average road racer tire, for example. Road racer type bicycles have thin tires and are not stable unless they are placed in the center of the bicycle stand, however, since the wheel can be easily placed in the center by guiding the mounted wheel using the inclined portions 314 and 324, it is possible to ensure the stability. The bicycle stand 1 can be applied to various bicycles, without limiting the bicycle to the road racer type bicycle, by appropriately designing the dimensions of each part. Further, since the bicycle stand 1 sandwiches the spokes of the wheel by receiving the weight from the wheel of the bicycle to fix the wheel, the heavier the bicycle, the more stable the wheel can be fixed. Therefore, the bicycle stand 1 can be used for other types of bicycles by designing it for the lightest road racer type bicycle.

Further, the frames 2 are closed only when the wheel is mounted, and when the bicycle stand 1 is not in use, the left and right frames 2 are opened by the action of the urging force from the urging member 35, therefore the bicycle stand 1 is easy to use. Further, by changing the design of the arrangement position of the stopper structure composed of the step portions 33b and 33c, or by providing an adjustable stopper structure, the opening degree of the left and right frames 2 can be made parallel or wider than the parallel.

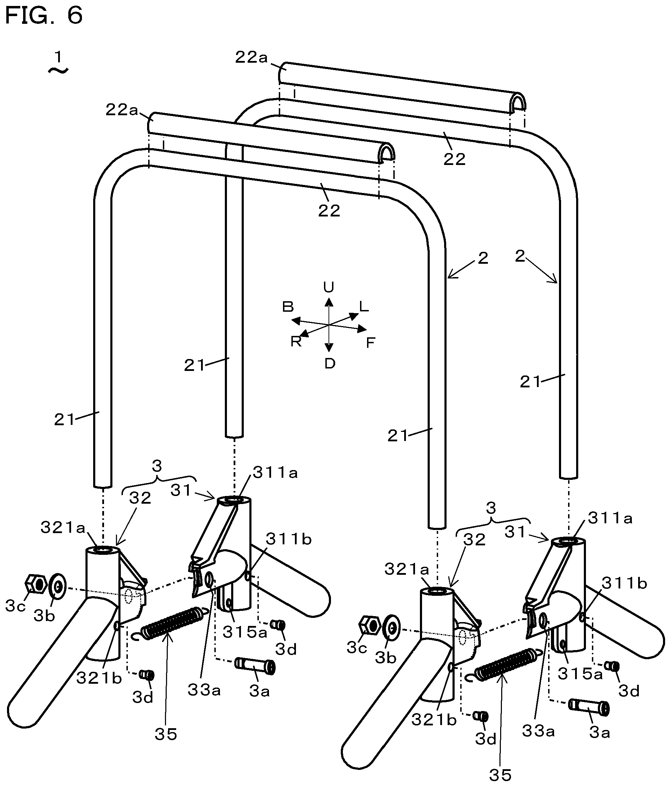

Next, the assembly of the bicycle stand 1 will be described. The bicycle stand 1 shown in FIG. 6 comprises frames 2 (2 pieces), resin molded products (4 pieces) for constituting the left member 31 and the right member 32, hinge shafts 3a (2 pieces), and nut sets 3b, 3c (2 sets), urging members 35 (2 pieces), buffering materials 22a (2 pieces), and set screws 3d (4 pieces) as parts.

The basic parts of the bicycle stand 1 are of two types parts, that is, the frames 2 and the resin molded products constituting the left member 31 and the right member 32. For parts other than those basic parts, i.e. the hinge shafts 3a and other parts, the bicycle stand 1 may be designed so as to use commercially available general and inexpensive parts, or may be designed so as not to use the parts themselves, depending on the design of the bicycle stand 1,

In the process of assembling the bicycle stand 1, for example, first, the left member 31 and the right member 32 are integrated to form one connecter 3 by using the hinge shaft 3a and the nut sets 3b and 3c. Two connecters 3 are assembled to prepare a pair of forward and backward connecters 3. The urging member 35 is attached to the connecter 3 using the locking holes 315a and 325a (not shown).

Next, by inserting the lower ends (there are four in total) of the forward and backward vertical portions 21 of the left and right frames 2 into the insertion holes 311a of the forward and backward left members 31 and the insertion holes 321a of the forward and backward right members 32, the pair of frames 2 are incorporated into the pair of forward and backward connecters 3, and then the basic structure of the bicycle stand 1 is completed.

If the user of the bicycle stand 1 is given the two connecters 3 to which the urging members 35 are attached at the manufacturing stage, the two frames 2, and other parts, in a packed state, the bicycle stand 1 can be shipped in a flat packaged state. The user can easily assemble the bicycle stand 1 from a flat shape to a three-dimensional shape simply by inserting the pipes (vertical portions 21) of the frames 2 into the insertion holes 311a and 321a of the connecters 3.

Further, the buffering materials 22a are appropriately fixed to the girder portions 22 of the frames 2. The mounting method or direction of the buffering material 22a on the girder portion 22 is not limited to a method from above, and may be mounted on the girder portion 22 from the inside lateral direction. The buffering materials 22a may have any physical or material properties and any cross-sectional shape if it have durability and a function for being in contact with the spoke portions of the wheel so as to appropriately support the wheel, and in one embodiment, a case without using the buffering materials 22a may be configured.

The frame 2 is appropriately fixed to the connecter 3 by using the set screw 3d and the fixing hole 311b provided on the lateral surface of the pillar portion 311 of the left member 31. Various structures can be used for the structure for fixing the vertical portion 21 of the frame 2 to the left member 31. For example, the vertical portion 21 is provided with a key hole through which the set screw 3d is inserted. The set screw 3d may be passed through the fixing hole 311b and inserted into this key hole. The screw thread of the set screw 3d is sufficient if the set screw 3d itself can be fixed. A pin without a screw thread, being able to prevent the vertical portion 21 from rotating and moving up and down, may be replaced with the set screw 3d.

The key holes provided in the vertical portion 21 may be used for adjusting the height position of the frame 2 by providing them at a plurality of upper and lower positions. Thereby, the height position, where the girder portions 22 of the frames 2 sandwich and support the spoke portion of the wheel from left and right, can be adjusted.

If the rotations of the vertical portions 21 inside the insertion holes 311a are not prevented, a rectangle, made by 90-degree four angles at the four vertical portions 21 as the rectangle vertices when the bicycle stand 1 is viewed from above, is deformed and becomes an arbitrary parallelogram. As another structure for preventing such a deformation due to those rotations, a pair of slit or concave groove and ridge structure can be used, in which the slit or concave groove is an appropriate slit (cutting) or concave groove provided on the surface of the vertical portion 21 from its lower end to higher place, and the vertical ridge is provided on the inner surface of the insertion hole 311a and oriented so as to fit into the slit or the concave groove (the vertical ridge may be a single pin or screw, or multiple pins or screws, protruding into the insertion hole 311a from lateral direction). In this case, the user can fix and prevent the rotation by simply inserting the vertical portion 21 of the frame 2 into the insertion hole 311a.

Further, in order to prevent the bicycle stand 1 from becoming a parallelogram deformed from a rectangle viewed from above, it is necessary to keep the distance (defined by the shortest distance) between the forward and backward connecters 3 constant, and therefore, for example, bolt-nuts, and/or structures may be used to rigidly integrate the forward and backward connecters 3. The structures for fixing the vertical portions 21 of the frames 2 to the left members 31 and the right members 32 are not limited to the above-mentioned structures inserting the lower ends of the vertical portions 21 into the insertion holes 311a, 321a, but any fixing structure may be used.

The configuration of the hinge 33 is not limited to a structure in which the left member 31 and the right member 32 rotate without loosening, but may be configured to rotate in a state of mutual play (appropriate degree of movement-freedom). For example, the shaft hole 33a, into which the hinge shaft 3a is inserted, may be a hole of long cross section in the left (L)-right (R) direction. This is a staggering or joint-shifting structure for shifting jaws to enable to hold or swallow a large prey. With such a degree of movement-freedom of the hinge 33, the bicycle stand 1 can freely cope with a wheel having a tire of various widths or girth.

Regardless of the arrangement position of the urging member 35 itself, the positions of the action points of the urging force from the urging member 35 are lower than the center position of the hinge 33 (position of the center of rotation), so that the left and right frames 2 are urged and maintained in an open state for facilitating wheel acceptance. Such function is used to improve the operability and convenience of the bicycle stand 1. As a matter of fact, the urging force is not used as a force for making or closing the small diameter recess 34b (swing-regulating recess); on the contrary the closing force is given by the load of the wheel 10. Therefore, the urging member 35 may not be provided, but only by adjusting the movability of the hinge 33 appropriately so that the frame 2 before use can be maintained in the open state without the urging member 35. In this case, the user may just open the frames 2 by himself or herself, if necessary, before using.

Further, the height positions of the action points of the urging force by the urging member 35 may be set to a height lower than the center height of the hinge 33 but near to the center height when the left and right frames 2 are open, so that the open state is maintained and the points of action can be moved above the center height of the hinge 33 to maintain the closed state, the position movement of the action points is caused by the load of the wheel. In this case, the urging member 35 has two, upper and lower, positions for staying in its stable tension state. The main body of the urging member 35 may be arranged at any position where it does not interfere with the wheel 10. As described above, according to such a structure in which the urging member 35 is arranged so as to be able to maintain two stable states, the urging force by the urging member 35 is used as the force for closing the small diameter recess 34b in addition to the load from the wheel 10. This structure can also be applied to the above-mentioned staggered or joint-shift structure of the hinge 33. The transition from the open state to the closed state is performed by the load of the wheel, however when the wheel is demounted from the closed state in which the wheel is mounted, an additional external force and operation by the user or the like are required.

According to the bicycle stand of the above-described embodiment, since the wheel mounting portions 34 of the connecters 3 are configured to receive loads from the wheel 10, to lower together with the hinges 33, to close, and to sandwich the tire 10a from left and right so as to regulate the swing of the tire 10a, the bicycle can be stably supported by suppressing the lateral movement of the tire 10a in the wheel mounting portion 34. Further, since the bicycle stand 1 is configured so that the tire is sandwiched by the wheel mounting portions 34 provided on the upper surfaces of the connecters 3, it is possible to realize the bicycle stand 1 cheaper than the case in which wheel-mounting parts for sandwiching the tire are provided additionally as separate structures in the conventional example. Further, since the bicycle stand 1 basically comprises two types of parts, namely, the frames 2 and the resin molded products being of the left member 31 and the right member 32, for example, it is enough to prepare only one type of resin molding mold, further, since it is only necessary to manufacture, store, and manage the basic parts for two types of parts, it is possible to realize a cheaper bicycle stand as compared with the conventional bicycle stand. In the above-described embodiment, it is described that the resin-molded products to be the left member 31 and the right member 32 are resin-molded parts having the same configuration which are resin-molded using the same mold or using a mold having the same-shape, however, the resin-molded products to be the left member 31 and the right member 32 do not have to be resin-molded using the same mold or a mold having the same shape, and they do not have to be parts having the same configuration.

Next, a modified example of the bicycle stand 1 is described. The modification shown in FIG. 7 differs from the above-described embodiment in that it comprises one connecter 3. The connecter 3 uses resin molded products having the same configuration as the left member 31 and the right member 32. Also in this modification, the left member 31 and the right member 32 may not have the same configuration, and may be resin molded products having different configurations. The wheel is mounted on the wheel mounting portion 34 formed on the upper surface of the connecter 3. The wheel mounting portion 34 is formed over an appropriate length in the forward-backward direction so that the wheel can be stably mounted in its rolling direction, and the middle portion in the forward-backward direction has a concave shape or a hole so that the lowermost end of the wheel does not contact the connecter 3. With this structure, the lower outer circumference of the wheel is supported from below at two places in the forward and backward.

The left member 31 has two legs 312, the right member 32 also has two legs 322, and the connecter 3 as a whole has four legs 312, 322. Those four legs 312 and 322 are provided outward in all four directions, in order to stabilize the bicycle stand 1 by dispersing the load of the wheel 10 over a wide area.

The bicycle stand 1 of this modified example has the same configuration as that of the wheel mounting portion 34 shown in FIGS. 5A and 5B. For example, at each of the forward and backward ends of the wheel mounting portions 34, which is long in forward and backward, a configuration of the structure shown in FIGS. 5A and 5B may be provided, so that the structure becomes the large-diameter recess of a large-diameter arc shape in the state where the wheel is not mounted, and becomes the small-diameter recess having a radius of curvature smaller than that of the large-diameter recess in the state where the wheel is mounted.

Further, as another wheel mounting portion 34 extending long in forward-backward, a configuration may be provided in which both ends of the wheel mounting portion 34 at forward-backward are configured mainly to receive the load from the wheel 10, and a center portion between the both ends of the wheel mounting portion 34 is configured mainly to suppress the left-right swing of the wheel by only sandwiching the tire 10a from left and right without receiving the load from the wheel 10. In such a configuration of the wheel mounting portion 34, since a function for receiving the load from the wheel from below at both forward and backward ends, and a function for suppressing the left-right swing of the wheel from left and right at the center portion of the forward and backward are shared by different parts, and therefore there is a degree of freedom in design, it is possible to realize a bicycle stand 1 that can support more types of wheels of different shapes. For example, since the structure for suppressing the left-right swing of the wheel from left and right in the central portion of the forward and backward does not need to have a rounded shape matched with the diameter of the tire 10a, and can contact the tire 10a from left and right regardless of the width dimension of the tire 10a, the structure for sandwiching the tire 10a can be made, for example, by simple planar shape.

According to the bicycle stand 1 of such a modified example, it is possible to have a compact configuration and reduce the number of parts. For example, since it is composed of a single connecter 3, a structure for preventing the rotation of the vertical portions 21 is unnecessary. The shape of the frame 2 may have, for example, an appropriate width in the forward-backward direction that can support the spoke portions of the wheel 10 by sandwiching the portions from left and right. Further, the frame 2 may be a plate-shaped member. The present invention is not limited to the configurations of the embodiments and modifications described with reference to FIGS. 1 to 7 above, and various modifications may be made.

### EXPLANATIONS OF LETTERS OR NUMERALS

- 1: Bicycle stand
- 10: Wheel
- 10a: Tire
- 2: Frame
- 21: Vertical portion
- 22: Girder portion
- 3: Connecter
- 31: Left member
- 32: Right member
- 311, 321: Pillar portion
- 312, 322: Leg portion
- 313, 323: Arm portion
- 314, 324: Inclined portion
- 33: Hinge
- 33a: Shaft hole
- 34: Wheel mounting portion
- 34a: Large-diameter recess (large-diameter arc shape)
- 34b: Small-diameter recess (small-diameter arc shape, swing-regulating recess)
- 3a: Hinge shaft
- 35: Urging member

## Claims

1. A bicycle stand (1) portable for supporting a wheel (10) of a bicycle, comprising:
a pair of left and right frames (2) that support the wheel (10) from left (L) and right (R); and
a connecter (3) for connecting lower ends of the frames (2) to each other, wherein
the connecter (3) comprises:
a left member (31) to which the left frame (2) is connected;
a right member (32) to which the right frame (2) is connected; and
a hinge (33) for rotatably connecting the left member (31) and the right member (32), wherein
each of the left and right members (31, 32) comprises:
a wheel mounting portion (34), integrally formed with each of the left and right members (31, 32), on which a tire (10a) of the wheel (10) is mounted; and
a leg portion (312, 322), integrally formed with each of the left and right members (31, 32), for securing a space in which the hinge (33) can move downward (D), wherein the hinge (33) is configured by butting and combining a part of the left member (31) and a part of the right member (32) and integrally formed with each of the left and right members (31, 32), and
when the wheel (10) is mounted on the wheel mounting portions (34), the hinge (33) is lowered by a load from the wheel (10), and the frames (2) and the wheel mounting portions (34), respectively, work so as to sandwich and support the wheel (10) and the tire (10a) from left and right.

2. The bicycle stand (1) according to claim 1, wherein each of the left member (31) and the right member (32) is made of a resin molded product, and each of the frames is made of a metal pipe bended.

3. The bicycle stand (1) according to claim 1 or 2, wherein each of the left member (31) and the right member (32) has an inclined portion (314, 324) for guiding the wheel (10) toward the wheel mounting portion (34).

4. The bicycle stand (1) according to any one of claims 1 to 3, wherein
the connecter (3) comprises an urging member (35) for urging the left member (31) and the right member (32) to rotate around the hinge (33) in respective directions in which upper ends of the left and right frames (2) are opened when the bicycle stand (1) is not used, and
the wheel mounting portions (34) have a large-diameter arc shape viewed from a forward (F)-backward (B) direction when the bicycle stand (1) is not used, and
the wheel mounting portions (34) have a small-diameter arc shape, of a radius of curvature smaller than that of the large-diameter arc shape, viewed from the same direction when the bicycle stand (1) is used while the wheel (10) is mounted and the left and right members (31, 32) are rotated against an urging force from the urging member (35).

5. The bicycle stand (1) according to claim 4, wherein the urging member(35) is arranged, regardless of whether the bicycle stand (1) is in use or not, to maintain a stable state both in an open or closed state of the upper ends of the left and right frames (2).

6. The bicycle stand (1) according to any one of claims 1 to 5, wherein
each of the left member (31) and the right member (32) has a shaft hole (33a) into which a hinge shaft (3a), being a rotating shaft of the hinge (33), is inserted, and
the shaft hole (33a) is configured such that the left member (31) and the right member (32) rotate with each other in a state of mutual play.

7. The bicycle stand (1) according to claim 6, wherein the shaft hole (33a) has an aperture elongated in the left (L)-right (R) direction.

8. The bicycle stand (1) according to any one of claims 1 to 7, wherein the connecters (3) of two are provided in the forward (F)-backward (B) direction so as to support the wheel (10) in that direction.

9. The bicycle stand (1) according to any one of claims 1 to 7, wherein the left member (31) and the right member (32) of the connecter 3 are long in the forward (F)-backward (B) direction so as to support the wheel (10) in that direction with the one connecter (3).
